Europäisches Patentamt

European Patent Office

Office européen des brevets

(11) Publication number : **0 554 978 A2**

# (12) EUROPEAN PATENT APPLICATION

(21) Application number : 93300287.5

(22) Date of filing : 18.01.93

(51) Int. Cl.⁵ : **A63B 69/36**, G01S 17/58

(30) Priority : 07.02.92 US 823732

(43) Date of publication of application :
**11.08.93 Bulletin 93/32**

(84) Designated Contracting States :
**FR GB SE**

(71) Applicant : **ACUSHNET COMPANY**
**700 Belleville Avenue**
**New Bedford, Massachusetts 02745 (US)**

(72) Inventor : **Gobush, William**
**17 Merrymount Drive**
**North Dartmouth, MA 02747 (US)**
Inventor : **Pelletier, Diane**
**24 Evergreen Street**
**Fairhaven, MA 02719 (US)**
Inventor : **Days, Charles**
**30 Sagamore Drive**
**South Dartmouth, MA 02748 (US)**

(74) Representative : **Topley, Paul**
**G.F. Redfern & Co. Marlborough Lodge 14**
**Farncombe Road**
**Worthing, West Sussex BN11 2BT (GB)**

(54) **Monitoring system to measure flight characteristics of moving sports object.**

(57)   A sports object flight monitoring system including at least two shutterable camera units each of which receives light patterns from each and every one of a plurality of contrasting areas on the object in rapid successive sequence. A computer receives the signals generated by the light patterns as received by each camera unit to determine the object's flight characteristics.

FIG. 1

EP 0 554 978 A2

## Background of the Invention

Ball monitoring devices for using multiple electro-sensors to determine the angle of launch, spin rate and speed of sports objects are old (U.S. Patent No. 4,136,387 and 4,158,853).

## Summary of the Invention

Broadly, the present invention comprises a portable system for monitoring the initial fight of an object in which multiple reflective areas or contrasting areas are located on the object which areas emit light to a plurality of cameras which receive a plurality of successive light patterns representing instances in the objects initial flight. The light patterns received by the cameras are processed by computer which compares known calibration light patterns with the received signals from the object during flight to compute initial flight characteristics of the object.

It is a feature of the system that it is compact, automatic and portable and can be readily calibrated on site.

It is also a feature that the use of multiple reflective or contrasting areas on the object permits two cameras to receive sufficient data despite initial object flight rotation.

## Brief Description of the Drawings

Figure 1 is a perspective view of the apparatus of the present invention position adjacent a teed golf ball;

Figure 2 is a perspective view of a three-dimensional field showing a golf ball passing through the field from position A to position B;

Figure 3 is a perspective view of a calibration fixture carrying twenty illuminable areas; and

Figure 4 is a plan view of the light receiving and sensory grid panel located in each camera.

## Brief Description of the Preferred Embodiment

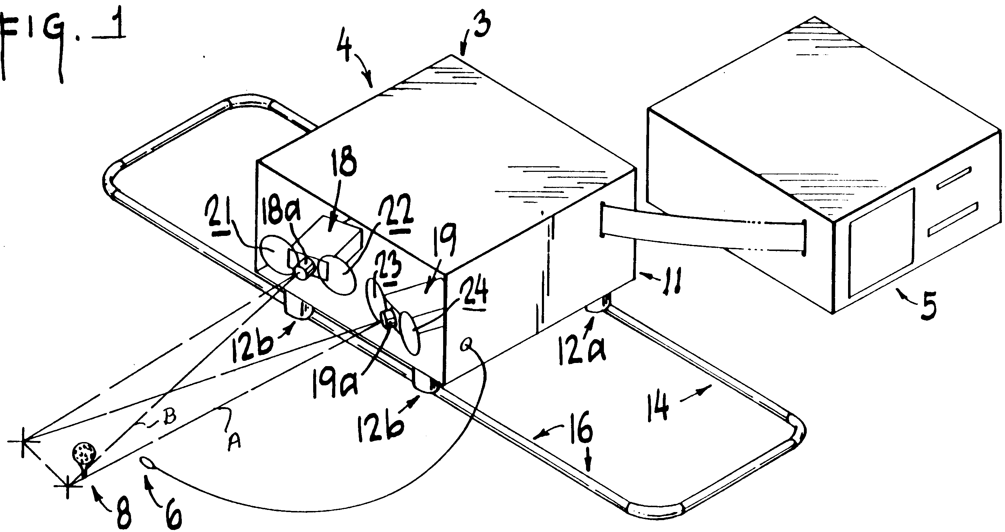

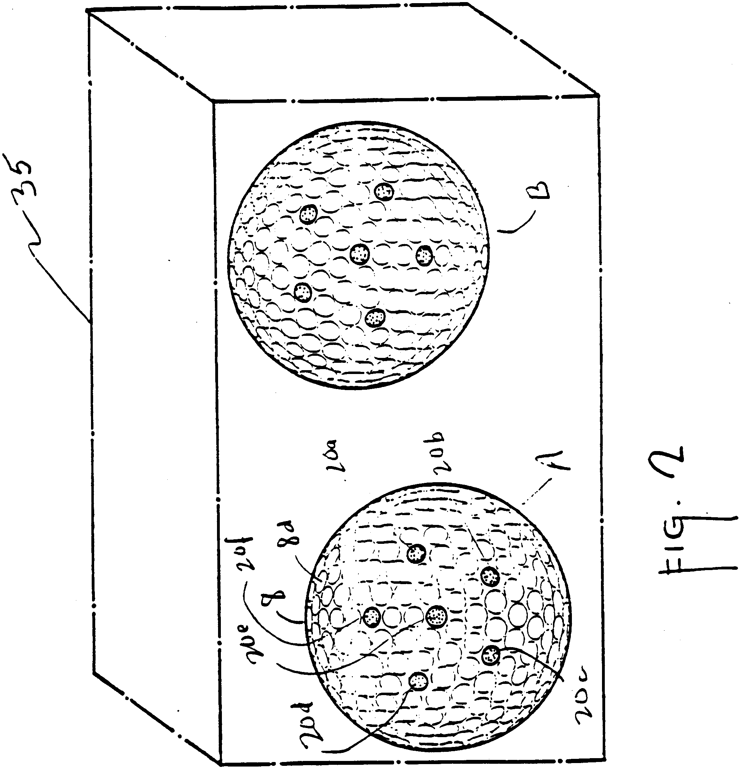

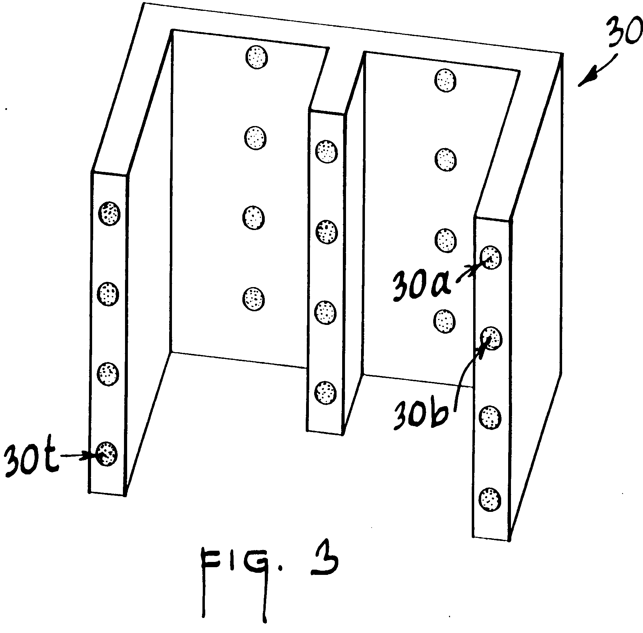

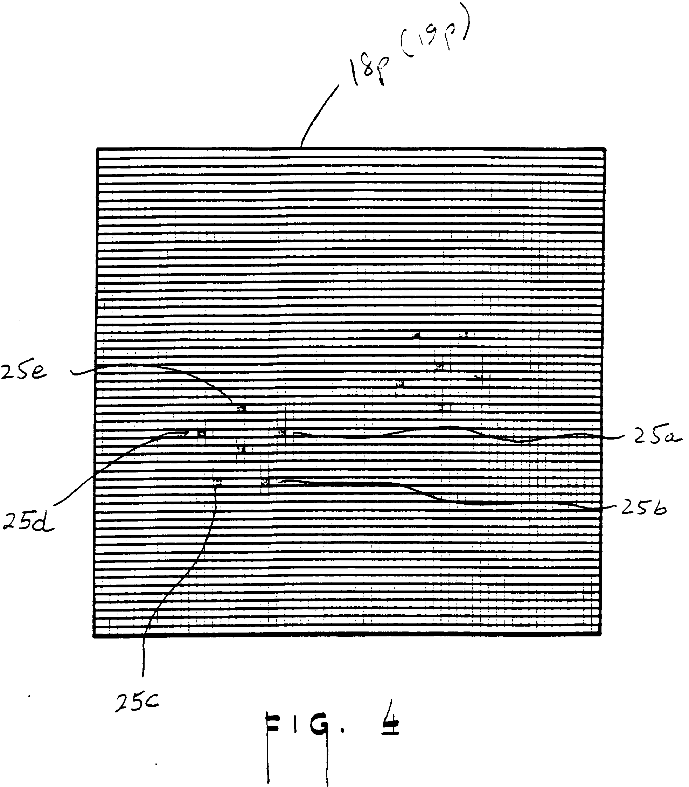

Referring to the Figures, system 3 in Figure 1 includes camera housing unit 4, computer 5, acoustical sensor 6 and teed golf ball 8. Camera unit 4 includes housing frame 11 and support feet 12a, 12b engageable with tracks 14, 16 so that the unit 4 can be adjusted relative to teed ball 8. Camera unit 4 further includes two electro-optical spaced-apart cameras 18, 19, which cameras have light-receiving apertures 18a, 19a, shutters (not shown) and light sensitive silicon panels 18p, 19p (see Figure 4). CCD cameras are preferred but TV-type cameras are also useful.

Turning to Figure 2, golf ball 8 has dimples 8d and six (6) reflective spaced-apart round areas or dots 20a-f. Round dots 20a-f having diameters of one-tenth (1/10)(2.5 mm) to one-eighth (1/8) of an inch (3 mm) are preferred but other size and shaped areas can be used. Dots 20a-f are preferably made of reflective material which is adhered to the ball surface. The "Scotchlite" brand beaded material made by Minnesota Mining and Manufacturing (3M) is preferred. Corner-reflective retroflectors may also be used. Alternatively, painted spots can be used that define contrasting areas. The number of dots or areas may be as few as three (3) up to six (6) or more provided each dot or area reflects light in ball position A and B capable of being receivable by camera 18, 19. Camera 18 is capable of receiving light from each and every dot 20 a-f and camera 19 is likewise capable of receiving light from each and every dot 20 a-f. The angle between lines A and B on Fig. 1 may be in the range of 10-30° with 22° being preferable.

Reflective materials as compared with the coated surface of a golf ball are as high as nine hundred (900) times brighter where the divergence angle between the beam of light striking the dots 20 a-f and the beam of light from the dots 20 a-f to the camera aperture is zero or close to zero. As the divergence angle increases the ratio of brightness of the dots a-f to the background (remaining ball surface) decreases. It will be appreciated that infra red lighting may be used to make the flash light invisible to the golfer.

Adjacent to camera 18 are two flash lamps 21, 22 and adjacent to camera 19 are two additional flash lamps 23, 24. Lamps 21, 22, 23 and 24 are placed as close to the operative of camera 18, 19 as possible to minimize the divergence angle and this increases the ability of the cameras 18, 19 to receive light from dots a-f and distinguish that light from light received from other portions of the ball surface and other background light. Alternatively, gating or shuttering can be accomplished by controlling the periods of time in which the light sensitive panels 18p, 19p will receive light and be activated by such light. A camera in which shuttering or gating is accomplished by operation of the sensor panels is a gated charge intensified camera. In this alternative, the light source is always on with camera shutters always open, thus employing the panels 18p, 19p to accomplish gating by gathering light only at two timed periods separated by 800 microseconds. A second alternative utilizes a ferroelectric liquid crystal shutter which opens and closes in 100 microseconds. In this alternative, a constant light source is used and shuttering occurs twice after the ball has been hit.

In the operation of the system, the initial step is calibration of the cameras 18, 19. The cameras 18, 19 are calibrated to a coordinate system fixed in space. To accomplish this calibration, fixture 30 of Figure 3 is physically located just ahead of where teed ball 8 will be placed. The fixture includes twenty (20) retro-dots 30a-t of 1/4"(6.25 mm) in diameter. Fixture 30 defines the global coordinate system by its three dimensional structure. The location of fixture 30 and spacing of cameras 18, 19 from the fixture 30 or each other need not be precise since the fixture 30 locates these when it determines the eleven constants for each camera 18, 19. The eleven constants determine the focal length, orientation and position of each camera 18, 19 given the premeasured points on fixture 30 and the twenty U and V coordinates digitized on each camera's sensor panels 18p, 19p.

Sensor panels 18p, 19p which receive a light pattern contain 240 lines of data and 510 pixels per line. The grid of Fig. 4 is merely illustrative in that it does not have 240 lines. A computer algorithm is used for centroid detection of each dot 20 a-f. Centroid detection of a dot is the location of the center area of the dot for greater accuracy and resolution. Each image received from dots 20 a-f results in an apparent x and y center position of each dot 20 a-f. Where light is low in the field of vision due to gating, an image intensifier may be used in conjunction with the sensor panels. An image intensifier is a device which produces an output image brighter than the input image.

The X, Y and Z coordinates of the center of each dot 30 a-t were premeasured to accuracy of one of one-ten thousandth of an inch (0.00254 mm) on a digitizing table and stored in the computer. An image of the calibration fixture 30 is taken by the two cameras 18, 19.

This image determines the eleven (11) constants relating image space coordinates U and V to the known twenty X, Y and Z positions on the calibration fixture 30.

The equations relating the calibrated X(i), Y(i), Z(i) spaced points with the $U_i(j)$, $V_i(j)$ image points are:

$$U_i^{(j)} = \frac{D_{1j}X(i) + D_{2j}Y(i) + D_{3j}Z(i) + D_{4j}}{D_{9j}X(i) + D_{10j}Y(i) + D_{11j}Z(i) + 1}$$

$$i = 1, 20$$
$$j = 1, 2$$

$$V_i^{(j)} = \frac{D_{5j}X(i) + D_{6j}Y(i) + D_{7j}Z(i) + D_{8j}}{D_{9j}X(i) + D_{10j}Y(i) + D_{11j}Z(i) + 1}$$

The eleven constants, Di1 (i = 1, 11) for camera 18 and the eleven constants, Di2 (i = 1, 11) for camera 19 are solved from knowing X(i), Y(i), Z(i) at the 20 locations and the 20 $U_i(j)$, $V_i(j)$ coordinates measured in the calibration photo for the two cameras.

With calibration completed, ball 8 which has been positioned about 30 inches from cameras 18 and 19 is struck and launched through three-dimensional field of view 35 (Fig. 2). Upon launch, the noise of striking is picked up by an acoustical sensor 6 which transmits a signal to open the shutter of camera 18 and camera 19 and to expose the image sensor panel in camera 18 and camera 19 to light from the six (6) ball dots. One hundred microseconds later, flash light 22 and light 23 fires a flash of light which illuminates the six (6) ball dots. Eight hundred (800) micro seconds later flash light 24 and light 21 fire a flash of light to illuminate the six (6) ball dots which are about 4 to 6 inches (101.6 to 152.4 mm) along the initial flight path in field 35. Flashes of light are between one-ten thousandth and a few millionths of a second in duration. Very small apertures are used in cameras 18 and 19 to reduce ambient light and enhance strobe light. As light reflects off dots 20 a-f in their two positions it reaches sensor panels 18p, 19p in corresponding panel areas 25 a-f.

Using the known ball 8 dimensions, the known time between camera operation and the known geometric relationships between the cameras, the external computing circuits are able to calculate the X, Y and Z positions of each enhanced spot in a common coordinate system at the time of each snapshot. From the position information and the known data the external computing circuits are able to calculate the ball velocity and spin in three dimensions during the immediate post-launch time period. Given the initial velocity and spin, plus known aerodynamic characteristics of the ball 8, the external computing circuits are capable of accurately predicting the flight path and point of landing of the ball.

Three-dimensional monitoring of ball 8 that has a radius of .84 inches (21.33 mm) is accomplished by representing the X, Y, Z position of each dot on ball 8 by its center of mass location TX, TY, TZ and its orientation matrix with angles A, E, T. The position of each dot (i-1, 2, ....6) is given by the matrix coordinate transformation

$$\begin{bmatrix} X(i) \\ Y(i) \\ Z(i) \end{bmatrix} = \begin{bmatrix} TX \\ TY \\ TZ \end{bmatrix} + \begin{bmatrix} M(A, E, T) \end{bmatrix} \begin{bmatrix} .84 \sin \theta(i) \cos \phi(i) \\ .84 \sin \theta(i) \sin \phi(i) \\ .84 \cos \theta(i) \end{bmatrix}$$

in which $\theta(i)$, $\phi(i)$ are the spherical polar coordinate position of the dots 20 a-f on the surface of ball 8 and

$$M(A, E, T) = \begin{bmatrix} M_{11} & M_{12} & M_{13} \\ M_{21} & M_{22} & M_{23} \\ M_{31} & M_{32} & M_{33} \end{bmatrix} \text{ is the orientation matrix.}$$

The orientation matrix, M, gives the three dimensional orientation transformation connecting the body coordinates of ball 8 with the fix global reference coordinate system calibrated earlier. The column vector (.84 sin $\theta$(i) cos $\phi$(i), .84 sin $\theta$(i) sin $\varnothing$(i), .84 cos $\theta$(i)), gives the position of a dot labeled i in the body fixed coordinate system. The optimum arrangement of dots 20 a-f is one pole dot at 0°,0° and the five surrounding dots are at $\theta$(i)=30° and $\varnothing$(i)=0°, 72°, 144°, 216°, 288°. An angle of theta much greater than 40° will not allow all six dots on the ball in the optimum configuration of the system to be captured on severely hooked or sliced golf shots.

The resulting equations to be solved given the camera coordinates, $U_i^{(j)}$, $V_i^{(j)}$, for the six dots, i, and two cameras j are as follows:

$$U_i^{(j)} = \frac{D_{1j}X(i) + D_{2j}Y(i) + D_{3j}Z(i) + D_{4j}}{D_{9j}X(i) + D_{10j}Y(i) + D_{11j}Z(i) + 1}$$

$$i = 1, 6$$
$$j = 1, 2$$

$$V_i^{(j)} = \frac{D_{5j}X(i) + D_{6j}Y(i) + D_{7j}Z(i) + D_{8j}}{D_{9j}X(i) + D_{10j}Y(i) + D_{11j}Z(i) + 1}$$

The resulting twenty-four equations are solved for TX, TY, TZ and orientation angles A, E, T for the ball's first location. A similar set of twenty-four equations are solved for in the second location position of the ball. The twenty-four equations are nonlinear and are solved iteratively linearizing by using Taylor's theorem. Generally, the equations converge to a solution for the six unknown parameters in four iterations.

The velocity components of the ball along the three axis of the coordinate system are then computed from the formulae:

$$V_x = \frac{T_x(t + \Delta T) - T_x(t)}{\Delta T}$$

$$V_y = \frac{T_y(t + \Delta T) - T_y(t)}{\Delta T}$$

$$V_z = \frac{T_z(t + \Delta T) - T_z(t)}{\Delta T}$$

in which $\Delta T$ is the time interval between strobe firings.

The spin components result from multiplying the orientational matrix M(A,E,T,t) and M(A',E',T',t+$\Delta T$) and equating the off diagonal elements of the resulting relative orientation matrix.

$$A(t, t + \Delta T) = M(t + \Delta T)M^T(t)$$

Then the magnitude, $\theta$, of the angle of rotation vector of the two balls during the time increment $\Delta T$ is given by:

$$\theta = \sin^{-1}(R/2)$$

4

$$\text{where } R = \sqrt{L^2 + M^2 + N^2}$$
$$L = A_{23} - A_{32}$$
$$M = A_{31} - A_{13}$$
$$N = A_{12} - A_{21}$$

The three orthogonal components of spin rate, Wx, Wy, Wz, are given by:

$$W_x = \sin^{-1}(R/2)\, L/\,(R\Delta T) = \theta L/\,(R\Delta T)$$
$$W_y = \sin^{-1}(R/2)M/\,(R\Delta T) = \theta M/\,(R\Delta T)$$
$$W_z = \sin^{-1}(R/2)N/\,(R\Delta T) = \theta N/\,(R\Delta T)$$

Other objects such as golf clubheads, baseballs, footballs, soccerballs, hockey pucks etc. may also be monitored using the system described.

## Claims

1.  A system for monitoring the initial portion of the flight of an object through a field of view comprising:
    (a) a support means for the object;
    (b) a portable housing including at least two cameras in fixed relationship in such housing;
    (c) a first camera unit in such housing having a light sensitive panel, said first camera unit being focused on the field of view through which the object passes during the initial portion of its flight;
    (d) a second camera unit in such housing having a light sensitive panel focused on the field of view;
    (e) means for shuttering or gating the camera units at least twice as the object passes through the field of view;
    (f) three or more contrasting areas on the object positioned so that light emitting from such areas reaches such light sensitive panels to form light patterns thereon and create analog image signal when the camera shutters are open; and
    (g) image digitizing means in or near such portable housing for receiving such analog signals to determine the path of the object, its speed and spin during such initial portion of flight.

2.  The system of claim 1 in which the shuttering means is a flash means which emits light in two flashes onto the object.

3.  An apparatus for measuring in a field the flight characteristics of a sports object passing through a field having a plurality of illuminable areas thereon comprising:
    (a) a first and a second spaced-apart electro-video unit in a portable housing, each unit having a shutter focused on the object in the field;
    (b) measuring means in the electro-video units which recognize the position of calibrated illuminal areas in the field;
    (c) at least three light reflecting dot means on the object;
    (d) a plurality of flash lights for lighting the field;
    (e) control means for opening and closing each shutter and energizing each light such that a light illuminates the object in the field when the object is at a first position and when it is at a second position;
    (f) light receiving means in the electro-video unit for receiving light from the dot means when the object is at the first position and at the second position; and
    (g) computer means in or near the housing for comparing the calibrated dot positions at first position with the dot positions at the second position.

4.  The system of claim 1 in which its object has six (6) contrasting areas.

5.  The system of claim 1 in which all means except the computer means and support means are located in the portable housing.

FIG. 1

FIG. 3

FIG. 4